# EUROPÄISCHE PATENTSCHRIFT

(11) **EP 1 386 420 B1**
(45) Veröffentlichungstag und Bekanntmachung des Hinweises auf die Patenterteilung: **07.03.2007**
(21) Anmeldenummer: 02740307.0
(22) Anmeldetag: 02.05.2002
(51) Int. Cl.: H04B 7/005

(54) **VERFAHREN UND VORRICHTUNG ZUM ANPASSEN DER SENDELEISTUNG BEI EINEM TIME-DIVISION-SYSTEM**
METHOD AND DEVICE FOR ADAPTING TRANSMITTER POWER IN A TIME-DIVISION-SYSTEM
PROCEDE ET DISPOSITIF DESTINES A ADAPTER LA PUISSANCE D'EMISSION DANS UN SYSTEME DE REPARTITION TEMPORELLE

(30) Priorität: 08.05.2001 DE 10122217
(43) Veröffentlichungstag der Anmeldung: 04.02.2004
(73) Patentinhaber: SIEMENS AKTIENGESELLSCHAFT, 80333 München (DE)
(72) Erfinder: KREUL, Theo, 48653 Coesfeld-Lettle (DE); SCHMIDT, Malte, 46397 Bocholt (DE); LANDENBERGER, Holger, 46395 Bocholt (DE); KARGER, Stephan, 46499 Hamminkeln (DE)
(86) Internationale Anmeldenummer: PCT/DE2002/001586
(87) Internationale Veröffentlichungsnummer: WO 2002/091620

(56) Entgegenhaltungen:
- WO-A-00/62442
- WO-A-01/22599
- WO-A-98/44754
- WO-A-98/53558

## Beschreibung

Die vorliegende Erfindung betrifft ein Verfahren zum Anpassen der Sendeleistung bei einem Time-Division-System (TD-System), bei dem eine Zeitachse in mehrere Frames aufgeteilt wird und jeder Frame in mehrere Timeslots aufgeteilt wird. Weiterhin betrifft die vorliegende Erfindung eine Vorrichtung zum Anpassen der Sendeleistung bei einem Time-Division-System, bei dem eine Zeitachse in mehrere Frames aufgeteilt wird und jeder Frame in mehrere Timeslots aufgeteilt wird.

Ein solches Verfahren ist aus der WO 98/44754 bekannt.

Bei Time-Division-Systemen werden auf derselben Frequenz mehrere Kanäle zur Verfügung gestellt. Dies erfolgt auf die Weise, dass ein bestimmter Frequenzbereich in unterschiedlichen Zeiträumen unterschiedliche Aufgaben erfüllt.

Beispielsweise wird beim Time-Division-Duplex (TDD) ein Time-Division-System in der Weise verwendet, dass dieselbe Frequenz für zwei Kanäle einer Vollduplexverbindung zu verschiedenen Zeiten genutzt wird. Dabei wird periodisch zwischen den beiden Kanälen hin und her geschaltet. Beispielsweise kann der Frequenzbereich in einem ersten Zeitraum für ein Uplink zur Verfügung stehen, das heißt für ein Senden von einer Mobilstation zu einer Basisstation, während der Frequenzbereich in einem zweiten Zeitbereich für ein Downlink genutzt wird, das heißt für ein Senden von einer Basisstation zu einer Mobilstation.

Ein weiteres Beispiel für ein Time-Division-System ist das Time-Division-Multiple-Access-Verfahren (TDMA). Beim TDMA-Verfahren handelt es sich um ein Zeitmultiplexverfahren, bei dem die Gesamtkapazität eines digitalen Übertragungssystems in einzelne Bereiche, sogenannte Timeslots einer bestimmten zeitlichen Länge unterteilt wird. Ein bestimmter Timeslot ist einem bestimmten Benutzer zugewiesen, so dass sich die unterschiedlichen Benutzer eines Systems im selben Frequenzbereich zeitlich abwechseln. Arbeitet man beispielsweise mit k Timeslots, so sind einem bestimmten Teilnehmer zum Beispiel der erste Timeslot, der Timeslot k+1, der Timeslot 2k+1 und so weiter zugewiesen. Dabei bezeichnet die Zahl k die Breite eines Frames. Die Timeslots x, k+x, 2k+x und so weiter werden im folgenden als sich entsprechende Timeslots bezeichnet.

Weiterhin ist es möglich, ein Time-Division-System mit einem Code-Division-System zu kombinieren. Das CDMA-Verfahren ist ein Verfahren, das mehreren Benutzern den Zugriff auf einen Übertragungskanal ermöglicht. Bei diesem Verfahren, das beispielsweise in Mobilfunksystemen eingesetzt wird, belegen mehrere Benutzer denselben Frequenzbereich, das Nutzsignal wird jedoch für jeden Benutzer unterschiedlich codiert. Für die Übermittlung der Bits wird für jeden Benutzer ein anderer Code verwendet als für alle anderen Benutzer. Die Codierung basiert auf einer Spreizung des Nutzdatenkanals. Dabei werden die einzelnen Bits eines schmalbandigen Nutzsignals durch längere Bitkombinationen ersetzt. Ersetzt man ein Bit durch eine Bitkombination von beispielsweise 10 Bits, dann erreicht man eine Spreizung um einen Faktor 10. Man benötigt zwar eine höhere Übertragungsbandbreite, kann jedoch den Übertragungskanal gleichzeitig für mehrere Nutzkanäle verwenden. Die Daten der einzelnen Benutzer sind im Übertragungskanal klar voneinander zu unterscheiden. Ein wesentlicher Vorteil des CDMA-Verfahrens, besteht in einer guten Ausnutzung der zur Verfügung stehenden Übertragungsbandbreite.

Das TDMA-Verfahren und das CDMA-Verfahren lassen sich zum TD-CDMA-Verfahren kombinieren. Dabei wird in einem Timeslot mit unterschiedlichen Codes gesendet, so dass ein Timeslot mehreren Benutzern zur Verfügung gestellt werden kann. Die Gesamtleistung in einem solchen Timeslot setzt sich dann aus den Leistungen der einzelnen dem Timeslot zugeordneten Benutzern zusammen.

Bei bekannten Time-Division-Systemen variiert die Sendeleistung für sich entsprechende Timeslots stark. Die Änderung der Leistungen ist dabei so groß, dass empfängerseitig der Dynamikbereich der Kombination aus Analog-Digital-Wandler und der automatischen Verstärkungssteuerung ("automatic gain control" (AGC)) sehr groß ausfallen musste. Grundsätzlich dient die automatische Verstärkungssteuerung dazu, das empfangene Signal an den Arbeitspunkt des Analog-Digital-Wandlers anzupassen. Beispielsweise bei Mobiltelefonen des Standes der Technik regelt die automatische Verstärkungssteuerung die Schwankungen der Empfangsleistung, die durch Schwankungen der Energie der Kanalimpulsantwort entsteht. Weiterhin werden Schwankungen korrigiert, die durch unterschiedliche Sendeleistung der Basisstation bei Änderung der Anzahl der physikalischen Kanäle entsteht. Ein großer Dynamikbereich der automatischen Verstärkungssteuerung erfordert jedoch einen entsprechenden Hardwareaufwand, was beispielsweise bei Mobiltelefonen unerwünscht ist.

Der Erfindung liegt die **Aufgabe** zugrunde, die Verwendung von Empfängern mit einer automatischen Verstärkungssteuerung zu ermöglichen, die mit einem möglichst geringen Dynamikbereich auskommt.

Diese Aufgabe wird mit den Merkmalen der unabhängigen Ansprüche gelöst.

Vorteilhafte Ausführungsformen und Weiterbildungen der Erfindung sind in den abhängigen Ansprüchen angegeben.

Das erfindungsgemäße Verfahren baut auf dem gattungsgemäßen Stand der Technik dadurch auf,
- dass für sich entsprechende Timeslots in unterschiedlichen Frames eine maximale Sendeleistungsdynamik durch Auswertung von von Endgeräten empfangenen Signalen bezüglich der Signalintensität adaptiv bestimmt wird, und
- dass die Bestimmung der maximalen Sendeleistungsdynamik für unterschiedliche Timeslots in demselben Frame unabhängig voneinander erfolgt.

Im Allgemeinen erfolgt die Zuordnung der Ressourcen, das heißt der Timeslots beziehungsweise der Codes, zu den Anwendern mit einer langsamen Änderungsrate von Frame zu Frame. Kennt man also die Struktur eines bestimmten Frames im Hinblick auf die dort auftretenden Signalleistungen, so kann man in guter Näherung davon ausgehen, dass der nächste Frame vergleichbar aussehen wird. Innerhalb der Frames kommt es jedoch zu großen Änderungsraten in der Sendeleistung, da im allgemeinen Fall benachbarte Timeslots unterschiedlichen Anwendern zugeordnet sind. Obwohl somit eine große Wahrscheinlichkeit vorliegt, dass sich die Sendeleistung von Timeslot zu Timeslot innerhalb eines Frames stark ändert, ermöglicht es das erfindungsgemäße Verfahren, dass sich entsprechende Timeslots in unterschiedlichen Frames zumindest mit einer ähnlichen Sendeleistung gesendet werden. Daher ist es empfängerseitig ausreichend, wenn die automatische Verstärkungssteuerung nur einen relativ kleinen Dynamikbereich aufweist, so dass beispielsweise in einem Mobiltelefon kein unerwünscht großer Hardware-Aufwand erforderlich ist.

Das erfindungsgemäße Verfahren sieht weiterhin vor, dass die maximale Sendeleistungsdynamik für die sich entsprechenden Timeslots in unterschiedlichen Frames adaptiv bestimmt wird. Zu diesem Zweck können beispielsweise die von entsprechenden Endgeräten empfangenen Signale bezüglich der Signalintensität ausgewertet werden. Dadurch ist es möglich, die maximale Sendeleistungsdynamik über die Zeit jeweils geeignet anzupassen.

Das erfindungsgemäße Verfahren kann seine Vorteile besonders dadurch gut entfalten, dass das Time-Division-System in einem Time-Division-Multiple-Access-Modus arbeitet. Hier wird den unterschiedlichen Signalintensitäten, welche durch unterschiedliche Teilnehmer in den verschiedenen Timeslots entstehen, Rechnung getragen.

Das erfindungsgemäße Verfahren kann vorteilhaft angewendet werden, wenn das Time-Division-System in einem Time-Division-Duplex-Modus arbeitet. Bei einem Time-Division-Duplex-Modus werden unterschiedliche Timeslots entweder als Sendekanäle oder als Empfangskanäle verwendet. Beispielsweise können die Sendekanäle einer Mobileinheit für einen Uplink verwendet werden, während die Empfangskanäle für einen Downlink verwendet werden. Dadurch, dass für sich entsprechende Timeslots in benachbarten Frames gleiche oder ähnliche Sendeleistungen verwendet werden, treten von Frame zu Frame keine großen Schwankungen in der Signalleistung auf und der empfängerseitig erforderliche Dynamikbereich der automatischen Verstärkungssteuerung kann relativ klein ausgelegt werden.

Ebenfalls kann es nützlich sein, dass das Time-Division-System in einem Time-Division-Code-Division-Multiple-Access-Modus arbeitet. Die verschiedenen Sendeintensitäten innerhalb sich entsprechender Timeslots waren dabei bisher beispielsweise durch Signalintensitäten bedingt, die von unterschiedlichen Endgeräten gefordert wurden, welche jeweils mit unterschiedlichen Codes arbeiten. Folglich waren die Sendeintensitäten für sich entsprechende Timeslots bisher stark unterschiedlich, was auch beim TD-CDMA durch das erfindungsgemäße Verfahren vermieden werden kann.

Dies gilt auch dafür, dass das Time-Division-System in einem Time-Division-Synchronous-Code-Division-Multiple-Access-Modus arbeitet. Dieser TD-SCDMA-Modus ist ein Verfahren, welches vorwiegend im asiatischen Raum zum Einsatz kommt. Mit ihm ist eine hohe spektrale Effizienz, unsymmetrische Zuweisungen von Uplink-Kanälen und Downlink-Kanälen, und eine hohe Flexibilität verbunden.

Die erfindungsgemäße Vorrichtung baut auf dem gattungsgemäßen Stand der Technik dadurch auf,
- dass Mittel zum adaptiven Bestimmen einer maximalen Sendeleistungsdynamik durch Auswerten von von Endgeräten empfangenen Signalen bezüglich einer Signalintensität vorgesehen sind, die für sich entsprechende Timeslots in unterschiedlichen Frames eine maximale Sendeleistungsdynamik bestimmen, und
- dass die Mittel zum Bestimmen der maximalen Sendeleistungsdynamik die Bestimmung der maximalen Sendeleistungsdynamik für unterschiedliche Timeslots in demselben Frame unabhängig voneinander durchführen.

Wie bereits im Zusammenhang mit dem erfindungsgemäßen Verfahren erläutert, erfolgt die Zuordnung der Ressourcen, das heißt der Timeslots beziehungsweise der Codes, zu den Anwendern im allgemeinen mit einer langsamen Änderungsrate von Frame zu Frame. Innerhalb der Frames kommt es dabei zu großen Änderungsraten in der Sendeleistung, da im allgemeinen Fall benachbarte Timeslots unterschiedlichen Anwendern zugeordnet sind. Obwohl somit eine große Wahrscheinlichkeit vorliegt, dass sich die Sendeleistung von Timeslot zu Timeslot innerhalb eines Frames stark ändert, ermöglicht es die erfindungsgemäße Vorrichtung ebenso wie das erfindungsgemäße Verfahren, dass sich entsprechende Timeslots in unterschiedlichen Frames zumindest mit einer ähnlichen Sendeleistung gesendet werden. Daher ist es auch durch den Einsatz des erfindungsgemäßen Verfahrens empfängerseitig ausreichend, wenn die automatische Verstärkungssteuerung nur einen relativ kleinen Dynamikbereich aufweist. Wie bereits erwähnt, kann dadurch beispielsweise ein unerwünscht großer Hardware-Aufwand in einem Mobiltelefon vermieden werden.

Auch im Zusammenhang mit der erfindungsgemäßen Vorrichtung ist weiterhin vorgesehen dass, dass die maximale Sendeleistungsdynamik für die sich entsprechenden Timeslots in unterschiedlichen Frames adaptiv bestimmt wird. Wie erwähnt können zu diesem Zweck beispielsweise die von entsprechenden Endgeräten empfangenen Signale bezüglich der Signalintensität ausgewertet werden, um die maximale Sendeleistungsdynamik über die Zeit jeweils geeignet anzupassen.

Bezüglich der Vorteile, die sich erfindungsgemäß ergeben, wenn das Time-Division-System in einem Time-Division-Multiple-Access-Modus (TDMA-Modus), einem einem Time-Division-Duplex-Modus (TDD-Modus), einem Time-Division-Code-Division-Multiple-Access-Modus (TD-CDMA-Modus) und einem Time-Division-Synchronous-Code-Division-Mulitple-Access-Modus (TD-SCDMA-Modus) arbeitet, wird auf die entsprechenden Ausführungen im Zusammenhang mit dem erfindungsgemäßen Verfahren verwiesen.

Die Erfindung wird nun mit Bezug auf die begleitenden Zeichnungen anhand bevorzugter Ausführungsformen beispielhaft erläutert.

### Dabei zeigt:

- Figur 1: ein Diagramm, bei dem verschiedene Intensitäten gegen die Zeit aufgetragen sind;
- Figur 2: ein weiteres Diagramm, bei dem verschiedene Intensitäten gegen die Zeit aufgetragen sind;
- Figur 3: ein Diagramm, bei dem Intensitäten in verschiedenen Timeslots gegen die Zeit aufgetragen sind; und
- Figur 4: ein Diagramm, welches eine Struktur aus Timeslots mit unterschiedlichen Codes in mehreren Frames bei einem TD-CDMA-System zeigt, wobei die maximale Sendeleistungsdynamik durch die erfindungsgemäße Vorrichtung bestimmt wird.

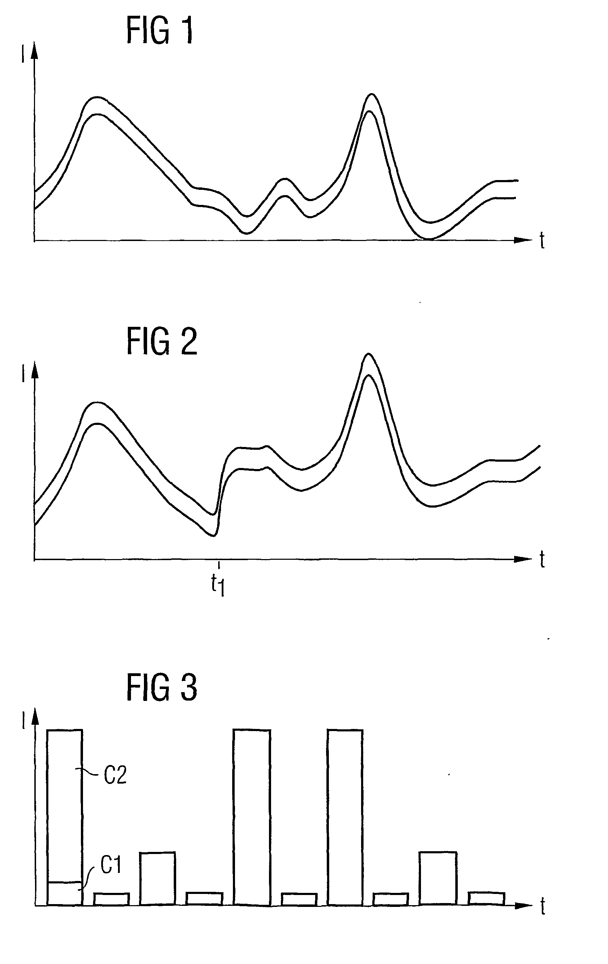

Figur 1 zeigt ein Diagramm, bei dem verschiedene Intensitäten I gegen die Zeit t aufgetragen sind. Die untere Kurve zeigt eine empfangene Leistung eines GSM-Systems. Die obere Kurve zeigt die Signalintensität, welche nach Regelung der Signalleistung durch die automatische Verstärkungssteuerung beziehungsweise -regelung vorliegt. Die Signalschwankungen beruhen bei dem GSM-System auf Schwankungen der Kanalimpulsantwort. Es ist erkennbar, dass die automatische Verstärkungssteuerung für einen kleineren Intensitätsbereich ausgelegt werden kann, wenn der Dynamikbereich der Sendeleistung begrenzt ist.

Figur 2 zeigt ein weiteres Diagramm, bei dem verschiedene Intensitäten I gegen die Zeit t aufgetragen sind. Hier ist ebenfalls in der unteren Kurve die empfangene Leistung dargestellt. Die obere Kurve zeigt wiederum das Ergebnis, welches nach der Regelung durch eine automatische Verstärkungssteuerung vorliegt. Die Schwankungen in dieser Darstellung beruhen auf Schwankungen der Kanalimpulsantwort und auf Änderungen der Anzahl der physikalischen Kanäle. An der Stelle t1 beginnt beispielsweise die Übertragung eines neuen Teilnehmers, so dass sich schlagartig die Intensität des empfangenen Signals ändert. Somit muss auch die automatische Verstärkungssteuerung reagieren und die Signalintensität an den Arbeitspunkt der Analog-Digital-Wandlers anpassen. Derartige Signalverläufe können zum Beispiel bei UMTS-FDD auftreten (Universal-Mobil-Telecommunication-System-Frequency-Division-Duplex). Auch hier ist zu erkennen, dass die automatische Verstärkungssteuerung für einen kleineren Intensitätsbereich ausgelegt werden kann, wenn der Dynamikbereich der Sendeleistung begrenzt ist.

In Figur 3 sind verschiedene Timeslots Ts mit unterschiedlichen Leistungen dargestellt, wobei in den unterschiedlichen Timeslots mit mehreren Codes C1, C2 gearbeitet wird. Auch hier ist zu erkennen, dass die automatische Verstärkungssteuerung für einen kleineren Intensitätsbereich ausgelegt werden kann, wenn das erfindungsgemäße Verfahren angewendet beziehungsweise die erfindungsgemäße Vorrichtung eingesetzt wird. Die Darstellung gemäß Figur 3 könnte beispielsweise ein UMTS-TDD-System charakterisieren (Universal-Mobil-Telecommunication-System-Time-Division-Duplex).

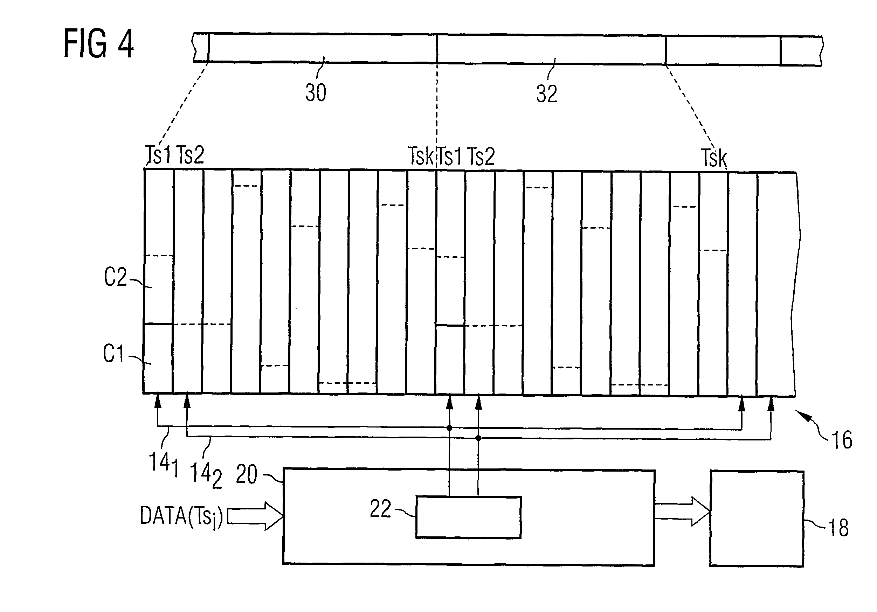

Figur 4 ist ein Diagramm, welches eine Struktur 16 aus Timeslots mit unterschiedlichen Codes in mehreren Frames bei einem TD-CDMA-System zeigt. Weiterhin ist die erfindungsgemäße Vorrichtung 20 dargestellt, die Mittel 22 aufweist, um eine maximale Sendeleistungsdynamik für sich entsprechende Timeslots Ts1, Ts2, ..., Tsk in unterschiedlichen Frames 30, 32 zu bestimmen, wobei die Mittel 22 zum Bestimmen der maximalen Sendeleistungsdynamik die Bestimmung der maximalen Sendeleistungsdynamik für unterschiedliche Timeslots Ts1, Ts2, ..., Tsk in demselben Frame 30, 32 unabhängig voneinander durchführen, wie dies durch die entsprechenden Pfeile 14₁ und 14₂ in Figur 4 angedeutet ist.

In der Struktur 16 sind zwei Frames 30, 32 dargestellt. Beide Frames 30, 32 sind in mehrere Timeslots Ts1, Ts2, ..., Tsk unterteilt. Die dargestellte Struktur 16 setzt sich zu weiteren Frames hin fort, wobei die Zuordnung der sich entsprechenden Timeslots erhalten bleiben kann. Innerhalb der Timeslots wird mit unterschiedlichen Codes C1, C2 gearbeitet. Die gepunktete Linie innerhalb der Timeslots gibt die gesamte Sendeleistung innerhalb eines Timeslots an. Es ist zu erkennen, dass sich entsprechende Timeslots in den benachbarten Frames 30, 32, beispielsweise die Timeslots Ts1 in Frame 30 und Ts1 in Frame 32, mit einer vergleichbaren Sendeleistung gesendet werden. Das gleiche gilt für die Timeslots Ts2 in den benachbarten Frames 30, 32, und so weiter. Die der Struktur 16 entsprechenden Daten DATA(Tsᵢ) werden der erfindungsgemäßen Vorrichtung bezogen auf einzelne Timeslots vorzugsweise parallel zugeführt, damit die Mittel 22 die geeignete maximale Sendeleistungsdynamik bestimmen können, wie dies in der Struktur 16 angedeutet ist. Anschließend können die entsprechenden Daten unter Berücksichtigung der jeweils bestimmten maximalen Sendeleistungsdynamik durch eine Sendeeinheit 18 gesendet werden.

### Bezugszeichenliste

- 14ᵢ: Zuordnung der jeweiligen maximalen Sendeleistungsdynamik
- 16: Struktur der Frames und Timeslots
- 18: Sendeeinheit
- 20: erfindungsgemäße Vorrichtung
- 22: Mittel zum Bestimmen einer maximalen Sendeleistungsdynamik
- 30: Frame
- 32: Frame
- Tsᵢ: Timeslots
- Cᵢ: Codes

## Patentansprüche

1. Verfahren zum Anpassen der Sendeleistung bei einem Time-Division-System (TD-System), bei dem
- eine Zeitachse in mehrere Frames (30, 32) aufgeteilt wird, und
- jeder Frame (30, 32) in mehrere Timeslots (Ts1, Ts2, ..., Tsk) aufgeteilt wird,
**dadurch gekennzeichnet,**
- **dass** für sich entsprechende Timeslots (Ts1, Ts2, ..., Tsk) in unterschiedlichen Frames (30, 32) eine maximale Sendeleistungsdynamik adaptiv bestimmt wird, und
- **dass** die Bestimmung der maximalen Sendeleistungsdynamik durch Auswertung von von Endgeräten empfangenen Signalen bezüglich der Signalintensität für unterschiedliche Timeslots (Ts1, Ts2, ..., Tsk) in demselben Frame (30, 32) unabhängig voneinander erfolgt.

2. Verfahren nach Anspruch 1,
**dadurch gekennzeichnet,**
**dass** das Time-Division-System in einem Time-Division-Multiple-Access-Modus (TDMA-Modus) arbeitet.

3. Verfahren nach Anspruch 1 oder 2,
**dadurch gekennzeichnet,**
**dass** das Time-Division-System in einem Time-Division-Duplex-Modus (TDD-Modus) arbeitet.

4. Verfahren nach, einem der vorangehenden Ansprüche,
**dadurch gekennzeichnet,**
**dass** das Time-Division-System in einem Time-Division-Code-Division-Multiple-Access-Modus (TD-CDMA-Modus) arbeitet.

5. Verfahren nach einem der vorangehenden Ansprüche,
**dadurch gekennzeichnet,**
**dass** das Time-Division-System in einem Time-Division-Synchronous-Code-Division-Mulitple-Access-Modus (TD-SCDMA-Modus) arbeitet.

6. Vorrichtung zum Anpassen der Sendeleistung bei einem Time-Division-System (TD-System), bei dem
- eine Zeitachse in mehrere Frames (30, 32) aufgeteilt wird, und
- jeder Frame (30, 32) in mehrere Timeslots (Ts1, Ts2, ..., Tsk) aufgeteilt wird,
**dadurch gekennzeichnet,**
- **dass** Mittel (22) zum adaptiven Bestimmen einer maximalen Sendeleistungsdynamik vorgesehen sind, die für sich entsprechende Timeslots (Ts1, Ts2, ..., Tsk) in unterschiedlichen Frames (30, 32) eine maximale Sendeleistungsdynamik bestimmen, und
- **dass** die Mittel (22) zum Bestimmen der maximalen Sendeleistungsdynamik durch Auswerten von von Endgeräten empfangenen Signalen bezüglich einer Signalintensität die Bestimmung der maximalen Sendeleistungsdynamik für unterschiedliche Timeslots (Ts1, Ts2, ..., Tsk) in demselben Frame (30, 32) unabhängig voneinander durchführen.

7. Vorrichtung nach Anspruch 6,
**dadurch gekennzeichnet,**
**dass** das Time-Division-System in einem Time-Division-Multiple-Access-Modus (TDMA-Modus) arbeitet.

8. Vorrichtung nach einem der Ansprüche 6 oder 7,
**dadurch gekennzeichnet,**
**dass** das Time-Division-System in einem Time-Division-Duplex-Modus (TDD-Modus) arbeitet.

9. Vorrichtung nach einem der Ansprüche 6 bis 8,
**dadurch gekennzeichnet,**
**dass** das Time-Division-System in einem Time-Division-Code-Division-Multiple-Access-Modus (TD-CDMA-Modus) arbeitet.

10. Vorrichtung nach einem der Ansprüche 6 bis 9,
**dadurch gekennzeichnet,**
**dass** das Time-Division-System in einem Time-Division-Synchronous-Code-Division-Multiple-Access-Modus (TD-SCDMA-Modus) arbeitet.

## Claims

1. Method for adjusting the transmission power in a time-division system (TD system), in which
- a time axis is divided into a plurality of frames (30, 32), and
- each frame (30, 32) is divided into a plurality of time slots (Ts1, Ts2, ..., Tsk),
**characterized**
- **in that** a maximum transmission power dynamic is adaptively defined for corresponding time slots (Ts1, Ts2, ..., Tsk) in different frames (30, 32), and
- **in that** the maximum transmission power dynamic for different time slots (Ts1, Ts2, ..., Tsk) in the same frame (30, 32) is defined independently of one another by evaluating signals received from the terminals with respect to a signal intensity.

2. Method according to Claim 1, **characterized in that** the time-division system operates in a time-division multiple access mode (TDMA mode).

3. Method according to Claim 1 or 2, **characterized in that** the time-division system operates in a time-division duplex mode (TDD mode).

4. Method according to one of the preceding claims, **characterized in that** the time-division system operates in a time-division/code-division multiple access mode (TD-CDMA mode).

5. Method according to one of the preceding claims, **characterized in that** the time-division system operates in a time-division/synchronous code-division multiple access mode (TD-SCDMA mode).

6. Device for adjusting the transmission power in a time-division system (TD system), in which
- a time axis is divided into a plurality of frames (30, 32), and
- each frame (30, 32) is divided into a plurality of time slots (Ts1, Ts2, ..., Tsk),
**characterized**
- **in that** means (22) for adaptively defining a maximum transmission power dynamic are provided which define a maximum transmission power dynamic for corresponding time slots (Ts1, Ts2, ..., Tsk) in different frames (30, 32), and
- **in that** the means (22) for defining the maximum transmission power dynamic, by evaluating signals received from terminals with respect to a signal intensity, define the maximum transmission power dynamic for different time slots (Ts1, Ts2, ..., Tsk) in the same frame (30, 32) independently of one another.

7. Device according to Claim 6, **characterized in that** the time-division system operates in a time-division multiple access mode (TDMA mode).

8. Device according to one of Claims 6 or 7, **characterized in that** the time-division system operates in a time-division duplex mode (TDD mode).

9. Device according to one of Claims 6 to 8, **characterized in that** the time-division system operates in a time-division/code-division multiple access mode (TD-CDMA mode).

10. Device according to one of Claims 6 to 9, **characterized in that** the time-division system operates in a time-division/synchronous code-division multiple access mode (TD-SCDMA mode).

## Revendications

1. Procédé d'adaptation de la puissance d'émission dans un système de répartition temporelle (TD = Time Division), dans lequel
- on divise un axe des temps en plusieurs trames (30, 32), et
- on divise chaque trame (30, 32) en plusieurs créneaux temporels (Ts1, Ts2, ..., Tsk),
**caractérisé par le fait que**
- pour des créneaux temporels (Ts1, Ts2, ..., Tsk) qui se correspondent dans des trames (30, 32) différentes, on détermine de façon adaptative une dynamique maximale de puissance d'émission, et
- on effectue la détermination de la dynamique maximale de puissance d'émission, en évaluant des signaux reçus par des terminaux quant à l'intensité de signal, pour différents créneaux temporels (Ts1, Ts2, ..., Tsk) dans la même trame (30, 32) indépendamment les uns des autres.

2. Procédé selon la revendication 1,
**caractérisé par le fait que** le système de répartition temporelle travaille dans un mode d'accès multiple par répartition temporelle (TDMA = Time Division Multiple Access).

3. Procédé selon la revendication 1 ou 2,
**caractérisé par le fait que** le système de répartition temporelle travaille dans un mode de duplex par répartition temporelle (TDD = Time Division Duplex).

4. Procédé selon l'une des revendications précédentes,
**caractérisé par le fait que** le système de répartition temporelle travaille dans un mode d'accès multiple par répartition temporelle et par répartition de code (TD-CDMA = Time Division - Code Division Multiple Access).

5. Procédé selon l'une des revendications précédentes,
**caractérisé par le fait que** le système de répartition temporelle travaille dans un mode d'accès multiple par répartition temporelle et par répartition de code synchrone (TD-SCDMA = Time Division - Synchronous Code Division Multiple Access).

6. Dispositif d'adaptation de la puissance d'émission dans un système de répartition temporelle (TD = Time Division), dans lequel
- un axe des temps est divisé en plusieurs trames (30, 32), et
- chaque trame (30, 32) est divisée en plusieurs créneaux temporels (Ts1, Ts2, ..., Tsk),
**caractérisé par le fait que**
- des moyens (22) sont prévus pour la détermination adaptative d'une dynamique maximale de puissance d'émission, lesquels moyens déterminent, pour des créneaux temporels (Ts1, Ts2, ..., Tsk) qui se correspondent dans des trames (30, 32) différentes, une dynamique maximale de puissance d'émission, et
- les moyens (22) pour la détermination adaptative d'une dynamique maximale de puissance d'émission effectuent, en évaluant des signaux reçus par des terminaux quant à une intensité de signal, la détermination de la dynamique maximale de puissance d'émission pour différents créneaux temporels (Ts1, Ts2, ..., Tsk) dans la même trame (30, 32) indépendamment les uns des autres.

7. Dispositif selon la revendication 6,
**caractérisé par le fait que** le système de répartition temporelle travaille dans un mode d'accès multiple par répartition temporelle (TDMA = Time Division Multiple Access).

8. Dispositif selon l'une des revendications 6 ou 7,
**caractérisé par le fait que** le système de répartition temporelle travaille dans un mode de duplex par répartition temporelle (TDD = Time Division Duplex).

9. Dispositif selon l'une des revendications 6 à 8,
**caractérisé par le fait que** le système de répartition temporelle travaille dans un mode d'accès multiple par répartition temporelle et par répartition de code (TD-CDMA = Time Division - Code Division Multiple Access).

10. Dispositif selon l'une des revendications 6 à 9,
**caractérisé par le fait que** le système de répartition temporelle travaille dans un mode d'accès multiple par répartition temporelle et par répartition de code synchrone (TD-SCDMA = Time Division - Synchronous Code Division Multiple Access).
